# FASCICULE DE BREVET EUROPEEN

(11) **EP 3 169 559 B1**
(45) Date de publication et mention de la délivrance du brevet: **05.08.2020**
(21) Numéro de dépôt: 15733459.0
(22) Date de dépôt: 02.07.2015
(51) Int. Cl.: B60S 1/04

(54) **PLATINE D'ESSUIE-GLACE, NOTAMMENT POUR VÉHICULES AUTOMOBILES**
SCHEIBENWISCHERPLATTE, INSBESONDERE FÜR KRAFTFAHRZEUGE
WINDOW WIPER PLATE, ESPECIALLY FOR MOTOR VEHICLES

(30) Priorité: 15.07.2014 FR 1456765
(43) Date de publication de la demande: 24.05.2017
(73) Titulaire: Valeo Systèmes d'Essuyage, 78322 Le Mesnil Saint Denis (FR)
(72) Inventeur: PICOT, Philippe, F-63500 Issoire (FR); ROUSSEL, Loic, F-63500 Issoire (FR)
(74) Mandataire: Valeo Vision
(86) Numéro de dépôt international: PCT/EP2015/065081
(87) Numéro de publication internationale: WO 2016/008734

(56) Documents cités:
- EP-A1- 0 739 792
- WO-A1-02/38425
- WO-A1-02/094622
- DE-A1- 2 920 899
- US-A1- 2003 143 020

## Description

La présente invention se rapporte à une platine d'essuie-glace, notamment pour véhicules automobiles.

On connaît par exemple des documents DE-A-2 920 899, WO 0238425 ou WO 9914086, une platine d'essuie-glace qui est constituée d'un élément support en forme de tige creuse coopérant avec au moins un palier d'essuie-glace par l'intermédiaire d'une protubérance portée par ledit palier.

Le palier d'essuie-glace peut être utilisé en tant que support d'un arbre d'entraînement lié à un dispositif d'essuie-glace constitué généralement d'un bras d'essuie-glace et d'un balai d'essuie-glace et/ou en tant qu'élément de fixation sur la carrosserie du véhicule automobile.

L'extrémité de l'élément support en forme de tige creuse est liée à la protubérance de manière fixe par tous moyens connus, tels que rivetage ou, comme décrit plus précisément dans la demande précitée, par des enfoncements de segments de l'élément support en forme de tige creuse dans des évidements que porte la protubérance de façon à réaliser une liaison inamovible entre le palier et la tige creuse.

Cependant, ces différents types de liaison présentent quelques inconvénients.

En effet, l'assemblage de la tige creuse avec la protubérance ne peut se faire qu'avec un certain jeu diamétral entre les deux pièces, autorisant le glissement de ladite tige creuse autour de la protubérance.

Dans le cas d'une liaison inamovible par rivetage par exemple, les jeux existant entre la protubérance et la tige subsistent en créant un interstice de disposition circulaire entre les surfaces de la tige creuse et la protubérance. De même, lors de l'opération de liaison inamovible par enfoncement de segments à l'intérieur des évidements, l'élément support en forme de tige creuse se déforme au niveau de la protubérance en augmentant ainsi le volume de l'interstice existant entre la paroi interne de la tige creuse et la paroi externe de la protubérance.

Cet interstice autorise l'introduction d'impuretés indésirables, telles que des projections d'eau, qui s'infiltrent à l'intérieur de l'élément support en forme de tige creuse et s'y accumulent.

Cette eau, à l'intérieur de la tige creuse, peut entraîner dans le temps un phénomène d'oxydation de la tige creuse pouvant entraîner, à terme, sa rupture et, dans le cas de tangage du véhicule, cette eau ressort par les interstices et vient en contact avec des éléments voisins de la carrosserie en pouvant entraîner également un phénomène d'oxydation des parties avoisinantes de la carrosserie.

Un autre problème peut survenir en cas de gèle de cette eau dans la tige creuse ce qui peut aussi altérer la structure de celle-ci, notamment lors de gels et dégels répétés en hiver, qui peut aller jusqu'à la désolidarisation de la tige creuse avec la protubérance.

Afin d'éviter que de l'eau puisse rentrer dans la tige creuse, le document FR 2670730 a proposé de disposer un moyen d'étanchéité de la tige creuse avec le palier, par exemple sous forme de joints d'étanchéité en matériau élastique introduits dans la tige creuse ou entourant celle-ci ainsi qu'une protubérance de raccordement du palier.

Toutefois, cette solution est couteuse et nécessite une opération spécifique de montage du joint. De plus, afin de pouvoir garantir l'étanchéité sur une longue durée, notamment tout au long de la vie du véhicule, c'est-à-dire entre 10 et 15ans, le matériau élastique choisi est couteux et doit être d'une qualité supérieure pour ne pas perdre en élasticité suite aux variations de température (été - hiver, soleil-ombre etc.) auxquelles le joint d'étanchéité est exposé, ce qui peut aussi entraîner une perte d'étanchéité.

La présente invention se propose de remédier au moins partiellement aux inconvénients ci-dessus mentionnés en présentant une platine d'essuie-glace à cout réduit qui permette de prévenir l'écoulement de l'eau à l'intérieur de l'élément support en forme de tige creuse.

A cet effet, l'invention a pour objet une platine d'essuie-glace, notamment pour véhicules automobiles, comportant :
- un élément support en forme de tige creuse, et
- au moins un palier de système d'essuie-glace comportant un tube destiné à supporter un axe d'entraînement de balai d'essuie-glace, le tube portant une protubérance destinée à coopérer avec la tige creuse,
- ladite protubérance comportant une zone de fixation pour fixer la tige creuse, la protubérance présentant une collerette disposée à distance du tube, la collerette étant destinée à éviter que l'eau ne s'écoule dans la tige creuse et présentant une forme oblongue, et en position assemblée, la collerette s'étend entre le tube et l'extrémité proximale de la tige creuse, la zone de fixation étant recouverte par la tige creuse.

Ainsi, la collerette dévie la course de l'écoulement d'eau et empêche qu'elle pénètre dans la tige creuse. Cette solution est facile à mettre en œuvre et très efficace et ne nécessite pas des opérations de montage complexes. La platine d'essuie-glace peut comporter en outre une ou plusieurs des caractéristiques suivantes prises seules ou en combinaison :
la collerette peut être réalisée d'une seule pièce avec la protubérance, ou bien être une pièce rapportée autour de la protubérance ;
- la collerette pourra par exemple être réalisée en métal, ou selon un autre aspect, être réalisée en matière plastique ou élastique, notamment en élastomère.

On pourra prévoir que la collerette s'étend en saillie du pourtour de la protubérance de manière à former un déflecteur d'eau.

On pourra également prévoir que cette collerette présente une forme oblongue dont le grand axe est compris dans un plan défini par l'axe du tube de support et par l'axe autour duquel s'étend sensiblement symétriquement la tige creuse. Et ce grand axe de la collerette oblongue pourra par exemple être parallèle à l'axe du tube de support ou perpendiculaire à l'axe de la protubérance.

Selon une autre série de caractéristiques, prises seules ou en combinaison, on pourra prévoir que la protubérance présente des nervures de rigidification, et que :
- ces nervures s'étendent de part et d'autre de la protubérance selon un axe parallèle à l'axe du tube ;
- la collerette est agencée au niveau des nervures de rigidification ;
- la collerette s'étend en saillie de ces nervures de rigidification.

Dans le cas où le tube de support présente un capuchon destiné à coopérer avec l'axe de timonerie, la collerette est par exemple agencé au-delà du déport de capuchon par rapport à l'axe du tube de support.

Selon un possible mode de réalisation de l'invention la collerette peut être disposée à distance du tube et à distance de l'extrémité libre de la tige creuse par laquelle la tige creuse est disposée autour de la protubérance. La collerette est ainsi dégagée de la tige creuse, c'est-à-dire non recouverte par cette tige creuse.

D'autres avantages et caractéristiques apparaîtront à la lecture de la description de l'invention, ainsi que des dessins annexés sur lesquels :
- la figure 1 est une première vue schématique en perspective d'une platine d'essuie-glace selon l'invention,
- la figure 2 est une seconde vue schématique en perspective de la platine de la figure 1, tourné d'environ 160°, et
- la figure 3 est une vue individuelle d'un palier d'essuie-glace.

Sur ces figures, les éléments identiques portent les mêmes numéros de référence.

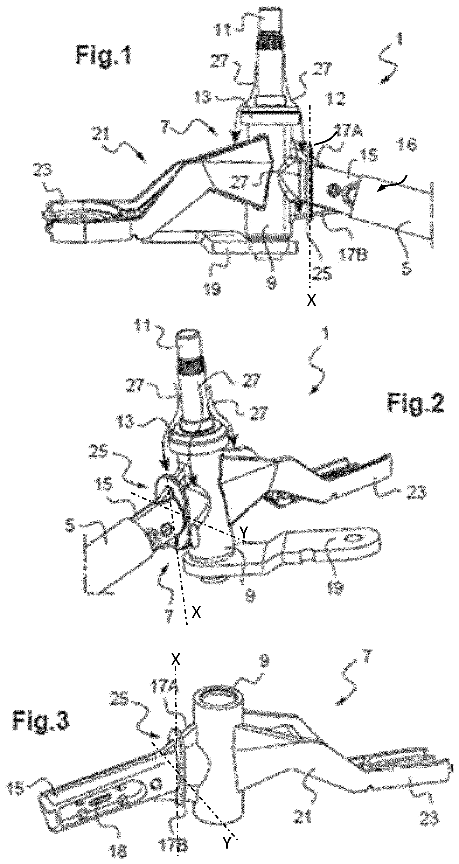

On va maintenant décrire un exemple d'un mode de réalisation d'une platine d'essuie-glace 1 selon l'invention en référence aux figures 1 à 3.

La platine d'essuie-glace 1 qui trouve notamment une application pour des véhicules automobiles, comporte un élément support en forme de tige creuse 5 et au moins un palier d'essuie-glace 7 présentant un tube 9 supportant un axe 11 d'entrainement de balai d'essuie-glace.

Un capuchon 13 est enfilé sur l'axe 11 d'entrainement de balai d'essuie-glace et assure l'étanchéité entre cet axe 11 et le tube 9.

Le capuchon 13 présente une première bague dimensionnée pour entourer l'axe d'entrainement 11 sans jeu, une paroi transversale prolongeant sensiblement perpendiculairement la première bague vers l'extérieur pour porter une deuxième bague 12 dimensionnée pour entourer le tube 9. Le capuchon forme un moyen d'étanchéité permettant d'éviter l'entrée d'eau notamment à l'intérieur du tube 9.

L'élément support, c'est-à-dire la tige creuse 5, coopère avec ledit palier 7 par l'intermédiaire d'une protubérance 15 portée par ledit palier 7. La tige creuse 5 est enfilée autour de la protubérance 15 par son extrémité proximale libre 16.

Cette protubérance 15 est par exemple réalisée d'une seule pièce avec le tube 9, par exemple par moulage, ou, en variante, sous forme d'une pièce rapportée fixée à ce tube 9 par soudure.

La protubérance 15 s'étend en saillie radiale du tube, sur une distance permettant de proposer une portée suffisamment grande pour le montage de la tige creuse. La protubérance 15 s'étend selon un axe principal incliné par rapport à la normale à l'axe du tube 9, de sorte que dans la position assemblée de la platine d'essuie-glace 1, la protubérance s'étend sensiblement vers le bas lorsque l'axe d'entraînement 11 en saillie du tube 9 s'étend lui vers le haut (selon l'orientation illustrée sur la figure 1). On comprend que de la sorte, de l'eau amené à se trouver sur la protubérance a tendance à couler par gravité vers l'extrémité libre de la protubérance 15 et donc vers la tige creuse 5.

La jonction de la protubérance et du tube 9 est renforcée par la présence de nervures de rigidification 17A et 17B, qui prennent chacune la forme d'équerre, sensiblement triangulaire, reliant le tube 9 à la protubérance 15. Ces nervures sont agencées de part et d'autre de la protubérance selon la direction axiale parallèle à l'axe du tube. On pourra identifier arbitrairement selon l'orientation illustrée sur la figure 1 une nervure supérieure 17A et une nervure inférieure 17B.

Comme cela est mieux visible sur la figure 3, la protubérance 15 présente au niveau de son extrémité libre une zone de fixation 18 configurée pour participer à la fixation de la tige creuse. Dans l'exemple illustré, la zone de fixation présente des empreintes de sertissage. La zone de fixation 18 a vocation à être recouverte par la tige creuse 5 lorsque celle-ci est enfilée sur la protubérance 15 avant sa fixation. Dans le cas illustré, on applique avec un outillage de forme adaptée, par exemple complémentaire à la forme des empreintes de la zone de fixation 18, une force de sertissage qui solidarise la tige creuse 5 autour de la protubérance 15.

L'axe 11 d'entrainement de balai d'essuie-glace est raccordé à son extrémité inférieure (vu sur les figures) à une manivelle 19 destinée à être reliée à un mécanisme d'entraînement non représenté des essuie-glaces.

A l'opposé de la protubérance 15 est fixée une queue de support 21 qui se termine à son extrémité libre par une bride de fixation 23 permettant de fixer le palier 7 par exemple sur un élément de la carrosserie du véhicule automobile.

Pour éviter que l'eau ne s'écoule dans la tige creuse 5, la protubérance 15 présente un déflecteur d'eau sous la forme d'une collerette 25. Cette collerette, afin de jouer son rôle de butée empêchant le passage d'eau vers la tige creuse, s'étend en saillie radiale du pourtour de la protubérance.

On entend par collerette une zone d'augmentation substantielle de la dimension moyenne de la protubérance 15, de telle sorte que l'eau arrivant depuis l'axe d'entraînement et coulant le long du tube soit stoppée par la collerette 25 et dégagée latéralement à distance de la protubérance pour ne pas pénétrer dans la tige creuse en aval.

La collerette 25 est disposée sur la protubérance à distance du tube 9 et plus particulièrement entre le tube 9 et la zone de fixation 18 configurée pour participer à la fixation de la tige creuse 5. De la sorte, lorsque la tige creuse 5 est assemblée sur la protubérance 15, la collerette s'étend entre le tube et l'extrémité proximale 16 de la tige creuse 5, la zone de fixation 18 étant recouverte par la tige creuse. La collerette est ainsi dégagée de la tige creuse, c'est-à-dire en d'autres termes que la collerette n'est pas recouverte par la tige creuse, de sorte qu'elle forme un moyen d'arrêt à l'écoulement de l'eau en amont de la tige creuse et qu'ainsi aucun liquide coulant depuis le tube 9 le long de la protubérance ne pénètre et ne stagne à l'intérieur de la tige creuse.

La collerette présente la forme d'une plaque disposée en travers de l'axe principal de la protubérance 15. Dans l'exemple illustré, la collerette 25 s'étend dans un plan sensiblement parallèle à l'axe du tube 9, mais on comprend qu'elle pourrait s'étendre dans un plan sensiblement perpendiculaire à l'axe principal de la protubérance 15, dès lors que la fonction de blocage de l'eau coulant le long de la protubérance est correctement réalisée. L'orientation de la collerette 25 par rapport aux axes du tube 9 et de la protubérance 15 pourra notamment être choisie en fonction de la distance à laquelle la collerette s'étend du tube, et donc en fonction de la direction d'arrivée d'eau au contact de la collerette.

Comme visible sur les figures, cette collerette 25 est réalisée d'une seule pièce avec la protubérance 15, par exemple d'une épaisseur de quelques mm, comme 2mm.

Selon une variante non représentée la collerette 25 est une pièce rapportée de forme adaptée qui présente par exemple une ouverture de forme complémentaire à la section transversale de la protubérance 15 pour être enfilée sur cette dernière et être fixée à celle-ci, par exemple par emmanchement de force.

Selon le mode de réalisation représenté sur les figures, la collerette 25 est en métal.

En variante, on peut envisager de la réaliser par exemple en matière plastique ou en matière élastique, notamment en élastomère, par exemple par surmoulage ou si la collerette 25 est une pièce rapportée en l'insérant sur la protubérance 15.

Comme on le voit sur les figures, la collerette 25 possède une forme oblongue. On définit le grand axe X de cette forme oblongue par le plus grand segment qui rejoint les deux points les plus opposés de la forme oblongue, en passant par le centre. Et on définit le petit axe Y de cette forme oblongue par le segment reliant deux points de la forme oblongue et passant par le centre en étant perpendiculaire au grand axe.

La collerette oblongue 25 est orientée de sorte que le grand axe X de cette collerette soit compris dans un plan défini par l'axe du tube 9 et par l'axe de la tige creuse 5, que la collerette soit perpendiculaire à la protubérance ou bien inclinée pour être parallèle à l'axe du tube.

Une telle orientation permet d'augmenter la dimension du déflecteur sur les zones où un maximum d'eau risque de couler le long de la protubérance, notamment au-dessus de la protubérance dans l'orientation illustrée sur la figure 1, de manière à augmenter ainsi la fonction de retenue d'eau pour l'empêcher de pénétrer dans la tige creuse, sans pour autant augmenter l'encombrement latéral autour de la protubérance.

Tel que cela a pu être précisé précédemment, on comprend que la collerette 25 doit s'étendre autour de la protubérance 15 entre le tube 9 et l'extrémité proximale libre 16 de la tige creuse 5 pour former un déflecteur de l'eau coulant le long du tube et de la protubérance et éviter que celle-ci ne pénètre dans la tige creuse.

Dans un mode de réalisation avantageux, la position de la collerette 25 est plus particulièrement prévue au-delà du déport de capuchon 13 par rapport à l'axe du tube 9. Cette position de la collerette est avantageuse pour éviter que de l'eau ne s'infiltre entre le déflecteur et la tige support, tel que cela sera décrit ci-après.

Sur les figures 1 et 2, on a représenté par des flèches 27 l'écoulement de l'eau le long de l'axe 11 d'entrainement de balai d'essuie-glace vers le bas et on voit que la collerette 25 est un moyen simple, efficace et peu couteux pour empêcher l'eau de s'écouler tout le long de la protubérance 15 et donc de pénétrer dans la tige creuse 5.

La collerette est avantageusement agencée à distance de la paroi du tube 9, au-delà du déport du capuchon 13, c'est-à-dire au-delà de la projection sur la protubérance de la deuxième bague 12 du capuchon selon l'axe du tube 9, de manière à pouvoir bloquer la totalité de l'eau projetée radialement vers l'extérieur du tube par le diamètre de la deuxième bague. L'eau déviée (visible par les flèches 27) par la deuxième bague 12 du capuchon 13 vient rencontrer la protubérance 15 en amont de la collerette 25.

Par ailleurs, la position de la collerette est plus particulièrement prévue pour qu'elle s'étende en saillie de la protubérance au niveau des nervures de rigidification 17A et 17B, en prenant appui sur celles-ci.

Cet agencement est notamment intéressant en termes de procédé de fabrication, puisque l'injection de matière pour former la collerette est facilitée. Dans cette zone du moule, de la matière est déjà injectée pour former les nervures et la matière injectée doit donc s'étaler moins profondément dans la rainure du moule correspondant à la formation de la collerette. Cet agencement est de fait plus intéressant économiquement et en termes de poids, car moins de matière à injecter est nécessaire. Par ailleurs, en termes de tenue mécanique, la portion en saillie de la collerette est rigidifiée par la présence des nervures.

Cet agencement est également intéressant lorsque la collerette est réalisée par une pièce rapportée, puisque la fixation de la collerette est rendu plus facile sur la nervure, par exemple par la réalisation d'une encoche transversale dans laquelle vient se loger la pièce formant collerette, que sur le pourtour cylindrique de la protubérance.

## Revendications

1. Platine d'essuie-glace (1), notamment pour véhicules automobiles, comportant :
- un élément support en forme de tige creuse (5), et
- au moins un palier de système d'essuie-glace (7) comportant un tube (9) destiné à supporter un axe (11) d'entrainement de balai d'essuie-glace, le tube (9) portant une protubérance (15) destinée à coopérer avec la tige creuse (5),
- ladite protubérance (15) comportant une zone de fixation (18) pour fixer la tige creuse (5), ladite protubérance (15) présentant une collerette (25) disposée à distance du tube (9), la collerette (25) étant destinée à éviter que l'eau ne s'écoule dans la tige creuse (5), **caractérisé en ce que** la collerette présente une forme oblongue, et **en ce que**, en position assemblée, la collerette (25) s'étend entre le tube (9) et l'extrémité proximale (16) de la tige creuse (5), la zone de fixation (18) étant recouverte par la tige creuse.

2. Platine d'essuie-glace selon la revendication 1, **caractérisé en ce que** la zone de fixation (18) s'étend au voisinage de l'extrémité libre de la protubérance (15), à l'opposé du tube (9).

3. Platine d'essuie-glace selon l'une des revendications précédentes, **caractérisé en ce que** la collerette (25) est réalisée d'une seule pièce avec la protubérance (15).

4. Platine d'essuie-glace selon l'une des revendications 1 à 2, **caractérisé en ce que** la collerette (25) est une pièce rapportée.

5. Platine d'essuie-glace selon l'une quelconque des revendications précédentes, **caractérisé en ce que** la collerette (25) est en métal.

6. Platine d'essuie-glace selon l'une quelconque des revendications 1 à 4, **caractérisé en ce que** la collerette (25) est en matière plastique ou élastique, notamment en élastomère.

7. Platine d'essuie-glace selon l'une quelconque des revendications précédentes, **caractérisé en ce que** la collerette (25) s'étend en saillie du pourtour de la protubérance (15) pour former un déflecteur d'eau.

8. Platine d'essuie-glace selon la revendication précédente, **caractérisé en ce que** le grand axe de la collerette (25) est compris dans le plan défini par l'axe du tube (9) et par l'axe autour duquel s'étend la tige creuse (5).

9. Platine d'essuie-glace selon l'une quelconque des revendications précédentes, **caractérisé en ce que** le grand axe de la collerette (25) est parallèle à l'axe du tube de support (9) ou perpendiculaire à l'axe de la protubérance (15).

10. Platine d'essuie-glace selon l'une quelconque des revendications précédentes, **caractérisé en ce que** la protubérance (15) présente des nervures de rigidification (17A, 17B).

11. Platine d'essuie-glace selon la revendication précédente, **caractérisé en ce que** les nervures de rigidification (17A, 17B) s'étendent de part et d'autre de la protubérance (15) selon un axe parallèle à l'axe du tube (9).

12. Platine d'essuie-glace selon la revendication 10 ou 11, **caractérisé en ce que** la collerette (25) est agencé au niveau des nervures de rigidification (17A, 17B).

13. Platine d'essuie-glace selon la revendication précédente, **caractérisé en ce que** la collerette (25) s'étend en saillie des nervures de rigidification (17A, 17B).

14. Platine d'essuie-glace selon l'une quelconque des revendications précédentes, **caractérisé en ce que** le tube (9) présente un capuchon (13) destiné à coopérer avec l'axe (11) d'entrainement de balai d'essuie-glace, ladite collerette (25) étant agencée au-delà du déport de capuchon (13) par rapport à l'axe du tube (9).

15. Platine d'essuie-glace selon l'une quelconque des revendications précédentes, **caractérisé en ce que** la collerette (25) s'étend autour de la protubérance (15) entre le tube (9) et la tige creuse (5), ladite collerette (25) étant dégagée de ladite tige creuse (5).

## Patentansprüche

1. Scheibenwischerplatte (1), insbesondere für Kraftfahrzeuge, aufweisend:
- ein Tragelement in Form einer Hohlstange (5), und
- mindestens ein Scheibenwischersystemlager (7), aufweisend ein Rohr (9), das dazu bestimmt ist, eine Scheibenwischerarm-Antriebsachse (11) zu tragen, wobei das Rohr (9) einen Vorsprung (15) trägt, der dazu bestimmt ist, mit der Hohlstange (5) zusammenzuwirken,
- der Vorsprung (15) aufweisend einen Befestigungsbereich (18) zur Befestigung der Hohlstange (5),
der Vorsprung (15) aufweisend einen Kragen (25), der von dem Rohr (9) beabstandet angeordnet ist, wobei der Kragen (25) dazu bestimmt ist, zu vermeiden, dass Wasser in die Hohlstange (5) fließt, **dadurch gekennzeichnet, dass** der Kragen eine längliche Form aufweist, und dadurch, dass sich der Kragen (25) in der zusammengesetzten Position zwischen dem Rohr (9) und dem proximalen Ende (16) der Hohlstange (5) erstreckt, wobei der Befestigungsbereich (18) von der Hohlstange verdeckt ist.

2. Scheibenwischerplatte nach Anspruch 1, **dadurch gekennzeichnet, dass** sich der Befestigungsbereich (18) in die Nähe des freien Endes des Vorsprungs (15) gegenüber dem Rohr (9) erstreckt.

3. Scheibenwischerplatte nach einem der vorhergehenden Ansprüche, **dadurch gekennzeichnet, dass** der Kragen (25) einstückig mit dem Vorsprung (15) ausgebildet ist.

4. Scheibenwischerplatte nach einem der Ansprüche 1 bis 2, **dadurch gekennzeichnet, dass** der Kragen (25) ein Aufsatzteil ist.

5. Scheibenwischerplatte nach einem der vorhergehenden Ansprüche, **dadurch gekennzeichnet, dass** der Kragen (25) aus Metall ist.

6. Scheibenwischerplatte nach einem der Ansprüche 1 bis 4, **dadurch gekennzeichnet, dass** der Kragen (25) aus Kunststoff oder elastischem Material ist, insbesondere aus Elastomer.

7. Scheibenwischerplatte nach einem der vorhergehenden Ansprüche, **dadurch gekennzeichnet, dass** sich der Kragen (25) von dem Umfang des Vorsprungs (15) hervorstehend erstreckt, um einen Wasserabweiser zu bilden.

8. Scheibenwischerplatte nach dem vorhergehenden Anspruch, **dadurch gekennzeichnet, dass** die Hauptachse des Kragens (25) in der Ebene liegt, die von der Achse des Rohrs (9) und von der Achse, um welche herum sich die Hohlstange (5) erstreckt, definiert ist.

9. Scheibenwischerplatte nach einem der vorhergehenden Ansprüche, **dadurch gekennzeichnet, dass** die Hauptachse des Kragens (25) parallel zur Achse des Tragrohrs (9) oder senkrecht zur Achse des Vorsprungs (15) verläuft.

10. Scheibenwischerplatte nach einem der vorhergehenden Ansprüche, **dadurch gekennzeichnet, dass** der Vorsprung (15) Versteifungsrippen (17A, 17B) aufweist.

11. Scheibenwischerplatte nach dem vorhergehenden Anspruch, **dadurch gekennzeichnet, dass** sich die Versteifungsrippen (17A, 17B) beiderseits des Vorsprungs (15) entlang einer Achse erstrecken, die parallel zur Achse des Rohrs (9) verläuft.

12. Scheibenwischerplatte nach Anspruch 10 oder 11, **dadurch gekennzeichnet, dass** der Kragen (25) an den Versteifungsrippen (17A, 17B) angeordnet ist.

13. Scheibenwischerplatte nach dem vorhergehenden Anspruch, **dadurch gekennzeichnet, dass** sich der Kragen (25) von den Versteifungsrippen (17A, 17B) hervorstehend erstreckt.

14. Scheibenwischerplatte nach einem der vorhergehenden Ansprüche, **dadurch gekennzeichnet, dass** das Rohr (9) eine Kappe (13) aufweist, die dazu bestimmt ist, mit der Scheibenwischerarm-Antriebsachse (11) zusammenzuwirken, wobei der Kragen (25) jenseits des Versatzes der Kappe (13) bezogen auf die Achse des Rohrs (9) angeordnet ist.

15. Scheibenwischerplatte nach einem der vorhergehenden Ansprüche, **dadurch gekennzeichnet, dass** sich der Kragen (25) um den Vorsprung (15) zwischen dem Rohr (9) und der Hohlstange (5) erstreckt, wobei der Kragen (25) von der Hohlstange (5) gelöst ist.

## Claims

1. Window wiper plate (1), especially for motor vehicles, comprising:
- a supporting element in the form of a hollow rod (5), and
- at least one window wiper system bearing (7) comprising a tube (9) for bearing a window wiper blade driving shaft (11), the tube (9) having a protuberance (15) for cooperating with the hollow rod (5),
- said protuberance (15) comprising a securing zone (18) for securing the hollow rod (5), said protuberance (15) having a collar (25) arranged at a distance from the tube (9), the collar (25) being for preventing water flowing into the hollow rod (5), **characterized in that** the collar has an oblong shape, and **in that**, in the assembled position, the collar (25) extends between the tube (9) and the proximal end (16) of the hollow rod (5), the securing zone (18) being covered by the hollow rod.

2. Window wiper plate according to Claim 1, **characterized in that** the securing zone (18) extends in the vicinity of the free end of the protuberance (15), opposite the tube (9).

3. Window wiper plate according to either of the preceding claims, **characterized in that** the collar (25) is produced as a single piece with the protuberance (15) .

4. Window wiper plate according to either of Claims 1 and 2, **characterized in that** the collar (25) is an add-on piece.

5. Window wiper plate according to any one of the preceding claims, **characterized in that** the collar (25) is made from metal.

6. Window wiper plate according to any one of Claims 1 to 4, **characterized in that** the collar (25) is made from a plastic or elastic material, especially from elastomer.

7. Window wiper plate according to any one of the preceding claims, **characterized in that** the collar (25) extends while projecting from the circumference of the protuberance (15) in order to form a water deflector.

8. Window wiper plate according to the preceding claim, **characterized in that** the major axis of the collar (25) is included within the plane defined by the axis of the tube (9) and by the axis around which the hollow rod (5) extends.

9. Window wiper plate according to any one of the preceding claims, **characterized in that** the major axis of the collar (25) is parallel to the axis of the supporting tube (9) or perpendicular to the axis of the protuberance (15).

10. Window wiper plate according to any one of the preceding claims, **characterized in that** the protuberance (15) has stiffening ribs (17A, 17B).

11. Window wiper plate according to the preceding claim, **characterized in that** the stiffening ribs (17A, 17B) extend on either side of the protuberance (15) along an axis parallel to the axis of the tube (9).

12. Window wiper plate according to Claim 10 or 11, **characterized in that** the collar (25) is arranged at the level of the stiffening ribs (17A, 17B).

13. Window wiper plate according to the preceding claim, **characterized in that** the collar (25) extends while projecting from the stiffening ribs (17A, 17B).

14. Window wiper plate according to any one of the preceding claims, **characterized in that** the tube (9) has a cap (13) for cooperating with the window wiper blade driving shaft (11), said collar (25) being arranged beyond the offset of the cap (13) relative to the axis of the tube (9).

15. Window wiper plate according to any one of the preceding claims, **characterized in that** the collar (25) extends around the protuberance (15) between the tube (9) and the hollow rod (5), said collar (25) being clear of said hollow rod (5).
